# EUROPEAN PATENT APPLICATION

(11) **EP 4 538 088 A1**
(43) Date of publication of application: **16.04.2025**
(21) Application number: 23818224.0
(22) Date of filing: 09.05.2023
(51) Int. Cl.: B60K 17/12, F16H 57/023, H02K 7/116

(54) **UNIT**

(30) Priority: 09.06.2022 JP 2022093644
(71) Applicant: Jatco Ltd., Shizuoka 417-8585 (JP)
(72) Inventor: MAEDA, Atsushi, Fuji-shi, Shizuoka 417-8585 (JP); SHOICHI, Minoru, Fuji-shi, Shizuoka 417-8585 (JP); UEHARA, Hiroki, Fuji-shi, Shizuoka 417-8585 (JP); SUWABAYASHI, Akira, Fuji-shi, Shizuoka 417-8585 (JP)
(74) Representative: Hoefer & Partner Patentanwälte mbB
(86) International application number: PCT/JP2023/017459
(87) International publication number: WO 2023/238579

(57) **Abstract**

[PROBLEM] To provide a unit that can be easily reduced in size.

[SOLUTION] The unit includes: a rotating electrical machine; a planetary gear mechanism connected downstream of the rotating electrical machine; a first gear connected downstream of the planetary gear mechanism; a second gear to mesh with the first gear; and a third gear connected downstream of the second gear. The rotating electrical machine, the planetary gear mechanism, and the first gear are disposed along a first axis, the second gear and the third gear are disposed along a second axis, and the third gear has a portion sandwiched between the planetary gear mechanism and the second gear.

## Description

### TECHNICAL FIELD

The present invention relates to a unit.

### BACKGROUND ART

Patent Document 1 discloses a unit including a speed reduction mechanism.

### PRIOR ART DOCUMENT

### PATENT DOCUMENT

Patent Document 1: JP2022-33113A

### SUMMARY OF INVENTION

### PROBLEM TO BE SOLVED BY THE INVENTION

An object of the present invention is to provide a unit that can be easily reduced in size.

### MEANS FOR SOLVING THE PROBLEM

According to an embodiment of the present invention, a unit is provided. The unit includes: a rotating electrical machine; a planetary gear mechanism connected downstream of the rotating electrical machine; a first gear connected downstream of the planetary gear mechanism; a second gear to mesh with the first gear; and a third gear connected downstream of the second gear. The rotating electrical machine, the planetary gear mechanism, and the first gear are disposed along a first axis, the second gear and the third gear are disposed along a second axis, and the third gear has a portion sandwiched between the planetary gear mechanism and the second gear.

### EFFECT OF THE INVENTION

According to an embodiment of the present invention, a unit can be easily reduced in size.

### BRIEF DESCRIPTION OF DRAWINGS

[FIG. 1] FIG. 1 is a schematic configuration diagram of a unit according to the present embodiment.
[FIG. 2] FIG. 2 is a longitudinal sectional view illustrating positional relation between an inverter and a planetary gear mechanism.

### DESCRIPTION OF EMBODIMENTS

Hereinafter, an embodiment of the present invention (hereinafter, simply referred to as the present embodiment) will be described with reference to the accompanying drawings.

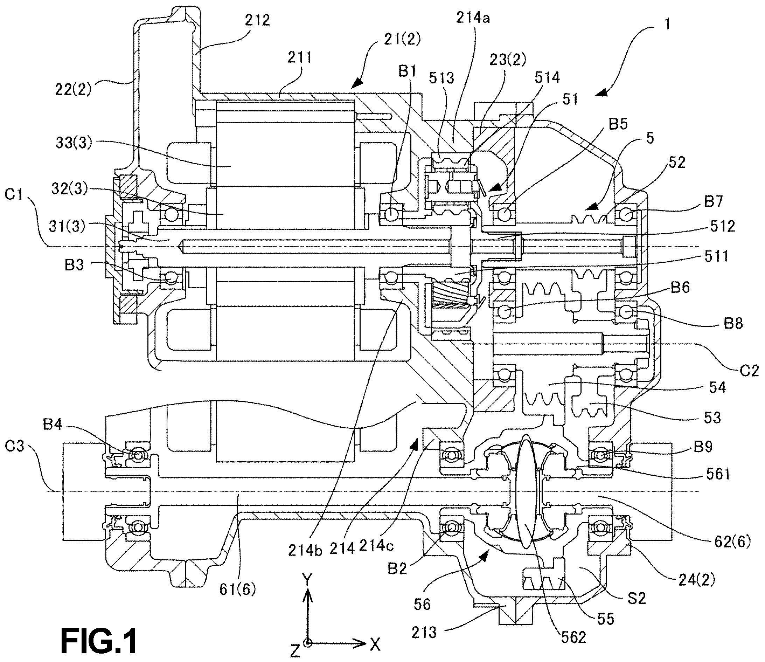

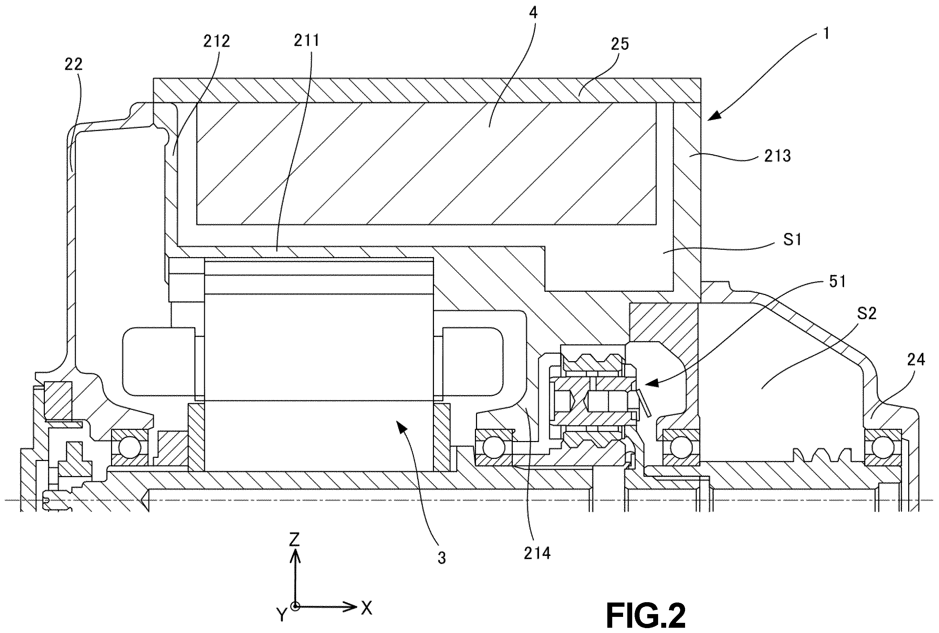

First, a unit 1 according to the present embodiment will be described with reference to FIGS. 1 and 2. In the present specification, the same elements are denoted by the same reference numerals throughout the drawings.

FIG. 1 is a schematic configuration diagram of the unit 1 according to the present embodiment. FIG. 2 is a longitudinal sectional view illustrating positional relation between an inverter 4 and a planetary gear mechanism 51.

The unit 1 illustrated in FIGS. 1 and 2 is used to drive driving wheels (not illustrated) of a vehicle, but is not limited thereto, and may be used, for example, to drive an electrical product. The unit 1 can also be referred to as a motor unit (a unit including at least a motor), a power transmission device (a device including at least a power transmission mechanism (for example, a gear mechanism and/or a differential gear mechanism)), or the like. The device (unit) including the motor and the power transmission mechanism belongs to concepts of both the motor unit and the power transmission device. Specifically, the unit 1 includes a housing 2, a motor 3 serving as a rotating electrical machine, an inverter 4, a reduction gear group 5 serving as a power transmission mechanism, and a drive shaft 6.

The housing 2 is an accommodating member that accommodates the motor 3, the inverter 4, the reduction gear group 5, and the drive shaft 6. The housing 2 includes one or more cases. Specifically, the housing 2 includes a first case 21, a second case 22, a third case 23 serving as a third wall portion, a fourth case 24, and a fifth case 25 (see FIG. 2).

The first case 21 is a 3in1 case. 3in1 means a form in which a part of a motor case, which accommodates the motor 3 and the drive shaft 6, and a part of an inverter case, which accommodates the inverter 4, are integrally formed.

The first case 21 includes: a cylinder 211 that is provided to be open at least at a front end that is one end; a front flange 212 that is provided to protrude toward an outer peripheral side at the front end of the cylinder 211; a rear flange 213 that is provided to protrude toward an outer peripheral side at a rear end that is the other end of the cylinder 211; and a support frame 214 that is disposed on an inner peripheral side of the cylinder 211 to be located at the rear end of the cylinder 211. Here, an axial direction X means an axial direction X of a rotation shaft of a component that constitutes the unit 1. Examples of the components include the motor 3, the gear mechanism, and the differential gear mechanism.

The support frame 214 includes: an annular wall 214a serving as a first wall portion that fixes a ring gear 513 of the planetary gear mechanism 51 (described later) of the reduction gear group 5; a first support wall 214b that is located closer to the front end of the cylinder 211 than the annular wall 214a and is disposed to support a bearing B1; and a second support wall 214c serving as a second wall portion that is aligned with the annular wall 214a in a horizontal direction Y that is a first radial direction, and is disposed to support a bearing B2 serving as a first bearing.

The first support wall 214b supports, via the bearing B1, a rear end, which is the other end, of a rotation shaft 31 (described later) of the motor 3. The second support wall 214c rotatably supports, via the bearing B2, a front end, which is one end, of a differential gear 56 serving as the differential gear mechanism (described later) of the reduction gear group 5 (specifically, a front end of a differential case 561 (described later) of the differential gear 56).

The annular wall 214a, the first support wall 214b, and the second support wall 214c are integrally formed. Accordingly, an increase in the number of components that constitute the support frame 214 can be prevented without individually forming the components.

The second case 22 is coupled to the front end of the cylinder 211 of the first case 21. Specifically, an outer periphery of the second case 22 is coupled to the front flange 212 by bolting. The second case 22 supports both bearings B3 and B4. Further, the second case 22 rotatably supports, via the bearing B3 and the bearing B4, both a front end, which is one end, of the rotation shaft 31 of the motor 3 and a front end, which is one end, of the drive shaft 6 (specifically, a first drive shaft 61 that constitutes the drive shaft 6), respectively.

The third case 23 is disposed on the inner peripheral side of the cylinder 211 to be located at the rear end of the cylinder 211. The third case 23 is formed separately from the support frame 214. The third case 23 is coupled to the support frame 214. Specifically, an outer periphery of the third case 23 is coupled to a rear end of the annular wall 214a of the support frame 214 by bolting such that the third case 23 is located in a region inside the first case 21.

The third case 23 supports: a bearing B5 serving as a second bearing that supports a front end, which is one end, of the first shaft 7 rotating integrally with a first gear 52 (described later) of the reduction gear group 5; and a bearing B6 serving as a third bearing that supports a front end, which is one end, of the second shaft 8 rotating integrally with a third gear 54 (described later) of the reduction gear group 5. Further, the third case 23 rotatably supports the front end of the first shaft 7 and the front end of the second shaft 8 via the bearing B5 and the bearing B6, respectively.

The fourth case 24 accommodates the reduction gear group 5. The fourth case 24 includes a bottomed cylinder. The bottomed cylinder is open at a front end that is one end and is closed at a rear end that is the other end. The fourth case 24 is coupled to the rear end of the cylinder 211. Specifically, an outer periphery of the front end of the fourth case 24 is coupled to the rear flange 213 by bolting.

The fourth case 24 supports: a bearing B7 that supports a rear end, which is the other end, of the first shaft 7; a bearing B8 that supports a rear end, which is the other end, of the second shaft 8; and a bearing B9 that supports a rear end, which is the other end, of the differential gear 56 (specifically, a rear end of the differential case 551). Further, the fourth case 24 rotatably supports the rear end of the first shaft 7, the rear end of the second shaft 8, and the rear end of the differential gear 56 via the bearing B7, the bearing B8, and the bearing B9, respectively.

The bearing B3, the bearing B1, the bearing B5, and the bearing B7 are disposed to be aligned in order in the axial direction X from the front side to the rear side. The bearing B6 and the bearing B8 are disposed to be aligned in order in the axial direction X from the front side to the rear side. The bearing B4, the bearing B2, and the bearing B9 are disposed to be aligned in order in the axial direction X from the front side to the rear side.

The bearing B2 is disposed to be located between the bearing B1 and the bearing B5. The bearing B9 is disposed to be located between the bearing B5 (or B6) and the bearing B7 (or B8).

As illustrated in FIG. 2, the fifth case 25 closes an opening of an inverter accommodating chamber S1 that is surrounded by the cylinder 211, the front flange 212, and the rear flange 213 of the first case 21 and accommodates the inverter 4. The fifth case 25 is coupled to the front flange 212, the rear flange 213, and the like by bolting.

The motor 3 is a rotating electrical machine having an electric motor function and/or a generator function. Further, the motor 3 includes: the rotation shaft 31 that is rotatably supported by the first case 21 and the second case 22 via the bearings B3 and B1; a rotor 32 that is located on an outer peripheral side of the rotation shaft 31 and rotates integrally with the rotation shaft 31; and a stator 33 that is fixed to the inner peripheral side of the cylinder 211 to be located on an outer peripheral side of the rotor 32.

The inverter 4 is a controller that controls driving of the motor 3. The inverter 4 is accommodated in the inverter accommodating chamber S1 to extend along the axial direction X.

The reduction gear group 5 is the power transmission mechanism that reduces the power of the motor 3 and transmits the reduced power to the drive shaft 6, and the reduction gear group 5 includes a plurality of gears. The reduction gear group 5 is connected downstream of the motor 3 in terms of power and connected upstream of the drive shaft 6 in terms of power. Further, the reduction gear group 5 is accommodated in a reduction gear group accommodating chamber S2 formed of the first case 21, the third case 23, and the fourth case 24 that are coupled together.

As illustrated in FIG. 1, the reduction gear group 5 includes the planetary gear mechanism 51 serving as a first element or a second element, the first gear 52, a second gear 53, a third gear 54, a fourth gear 55, and the differential gear 56, which are disposed in this order from upstream to downstream. The power from the motor 3 is transmitted to the drive shaft 6 via the planetary gear mechanism 51, the first gear 52, the second gear 53, the third gear 54, the fourth gear 55, and the differential gear 56 in this order.

Hereinafter, the second element (component, portion, or the like) connected to the first element (component, portion, or the like) / the second element (component, portion, or the like) connected downstream of the first element (component, portion, or the like) / the second element (component, portion, or the like) connected upstream of the first element (component, portion, or the like) means that the first element and the second element are connected in a manner capable of transmitting power. A power input side is upstream, and a power output side is downstream. Further, the first element and the second element may be connected via another mechanism (for example, a clutch or another gear mechanism).

The planetary gear mechanism 51 is connected downstream of the motor 3. The planetary gear mechanism 51 is accommodated on an inner peripheral side of the annular wall 214a such that a front side and a rear side of the planetary gear mechanism 51 face the first support wall 214b and the third case 23, respectively. That is, the planetary gear mechanism 51 is disposed in a region surrounded by the annular wall 214a, the first support wall 214b, and the third case 23.

Accordingly, after the planetary gear mechanism 51 is attached to the annular wall 214a, the third case 23 that is separate from the first case 21, the first gear 52, the second gear 53, the third gear 54, and the like, can be attached, and therefore, a case structure that is easy to assemble can be obtained.

Further, since the planetary gear mechanism 51 is located only in the region inside the first case 21 rather than in a region inside the fourth case 24, the first gear 52 and the second gear 53 can be disposed closer to the motor 3 in the axial direction X than in a configuration in which the planetary gear mechanism 51 is disposed in a region inside the fourth case 24. As a result, this can contribute to reduce the unit 1 in size (in particular, in the axial direction X).

Further, the planetary gear mechanism 51 overlaps the inverter accommodating chamber S1 when viewed in a radial direction. That is, the planetary gear mechanism 51 and the inverter accommodating chamber S1 are aligned in a vertical direction Z that is a second radial direction orthogonal to the horizontal direction Y.

In other words, when viewed in the radial direction, the inverter accommodating chamber S1 has a portion that overlaps the planetary gear mechanism 51. Accordingly, a space is generated radially outward from a space in which the planetary gear mechanism 51 is disposed, and this space can be effectively utilized by forming the inverter accommodating chamber S1 in this space, which can contribute to reducing the entire unit 1 in size.

The planetary gear mechanism 51 includes a sun gear 511, a carrier 512, and the ring gear 513. A pinion gear group 514 to mesh with both the sun gear 511 and the ring gear 513 is disposed between the sun gear 511 and the ring gear 513. The ring gear 513 is non-rotatably fixed to an inner periphery of the annular wall 214a. The pinion gear group 514 is rotatably supported by the carrier 512.

The sun gear 511 is coupled to the rear end of the rotation shaft 31 to rotate integrally with the rotation shaft 31. The carrier 512 is coupled to the front end of the first shaft 7 to rotate integrally with the first shaft 7. The first shaft 7 is rotatably supported by the third case 23 and the fourth case 24 via the bearing B5 and the bearing B7. An axis of the rotation shaft 31 and an axis of the first shaft 7 are both an axis C1 serving as a first axis. In this way, by disposing the planetary gear mechanism 51 coaxially with the rotation shaft 31 of the motor 3, a high transmission gear ratio is implemented, and expansion of the unit 1 in the radial direction can be prevented as compared with a configuration in which the planetary gear mechanism 51 is disposed non-coaxially with the rotation shaft 31.

The first gear 52 is connected downstream of the planetary gear mechanism 51 to be closer to the bearing B7 than to the bearing B5. The first gear 52 is formed on an outer periphery of the first shaft 7 to rotate integrally with the first shaft 7. The motor 3, the planetary gear mechanism 51, and the first gear 52 are disposed coaxially with the axis C1. Accordingly, by providing the planetary gear mechanism 51 coaxially between the first gear 52 serving as a first-stage gear and the motor 3, the expansion of the unit 1 in the radial direction can be prevented.

The second gear 53 meshes with the first gear 52. The second gear 53 includes a larger number of teeth than the first gear 52, and constitutes a first reduction gear stage together with the first gear 52. The second gear 53 is coupled to an outer periphery of the second shaft 8 to rotate integrally with the second shaft 8. The second shaft 8 is rotatably supported by the third case 23 and the fourth case 24 via the bearing B6 and the bearing B8 to be parallel to the first shaft 7 and located between the first shaft 7 and the drive shaft 6.

The third gear 54 is connected downstream of the second gear 53 to be closer to the bearing B6 than to the bearing B8. The third gear 54 is formed on the outer periphery of the second shaft 8 to rotate integrally with the second shaft 8. That is, the second gear 53 and the third gear 54 are disposed coaxially with an axis C2 of the second shaft 8 serving as a second axis.

The third gear 54 is located between the planetary gear mechanism 51 and the second gear 53. That is, the third gear 54 has a portion sandwiched between the planetary gear mechanism 51 and the second gear 53. Accordingly, expansion of the unit 1 in the axial direction X and radial directions Y and Z is prevented as compared with a configuration in which the second gear 53 is located between the planetary gear mechanism 51 and the third gear 54.

The planetary gear mechanism 51 overlaps the second gear 53 and the third gear 54 when viewed in the axial direction. That is, the planetary gear mechanism 51, the second gear 53, and the third gear 54 are aligned in the axial direction X.

In other words, the planetary gear mechanism 51 has a portion that overlaps the second gear 53 and the third gear 54 when viewed in the axial direction. Accordingly, a space of the reduction gear group accommodating chamber S2 can be effectively utilized, which can contribute to reducing the entire unit 1 in size.

The fourth gear 55 meshes with the third gear 54. The fourth gear 55 includes a larger number of teeth than the third gear 54, and constitutes a second reduction gear stage together with the third gear 54. In the reduction gear group 5, a two-stage reduction is performed by the first gear 52 and the second gear 53, and the third gear 54 and the fourth gear 55. Accordingly, in order to ensure a reduction ratio, a diameter of a reduction gear can be reduced as compared with one-stage reduction.

The differential gear 56 is connected downstream of the fourth gear 55. The differential gear 56 includes the differential case 561 and a differential unit 562.

The differential case 561 accommodates the differential unit 562. The differential case 561 is rotatably supported by the first case 21 and the fourth case 24 via the bearing B2 and the bearing B9. The differential case 561 is coupled to an inner periphery of the fourth gear 55 to rotate integrally with the fourth gear 55.

The differential unit 562 transmits, to the drive shaft 6, power transmitted to the differential case 561 via the fourth gear 55.

The drive shaft 6 rotates integrally with the drive wheels of the vehicle. The drive shaft 6 is connected downstream of the differential gear 56 to be parallel to the rotation shaft 31. Further, the drive shaft 6 includes the first drive shaft 61 coupled to one drive wheel and a second drive shaft 62 coupled to the other drive wheel. An axis of the first drive shaft 61 and an axis of the second drive shaft 62 are both an axis C3 serving as a third axis.

The fourth gear 55 and the differential gear 56 are disposed coaxially with the axis C3. The differential gear 56 is disposed closer to the planetary gear mechanism 51 than the fourth gear 55. That is, the differential gear 56 has a portion that is located between the planetary gear mechanism 51 and the fourth gear 55.

Accordingly, a space is generated radially outward from the space in which the planetary gear mechanism 51 is disposed, and this space can be effectively utilized by disposing the differential gear 56 in this space, which can contribute to reducing the entire unit 1 in size.

The differential gear 56 overlaps the third case 23 when viewed in the radial direction. That is, the differential gear 56 and the third case 23 are aligned in the horizontal direction Y.

In other words, when viewed in the radial direction, the differential gear 56 has a portion that overlaps the third case 23. Accordingly, an opening serving as a space surrounded by the first case 21 and the third case 23 is generated radially outward from a space in which the third case 23 is disposed, and the space created by this opening can be effectively utilized by forming the differential gear 56 to pass through the opening (that is, by disposing the differential gear 56 in both the region inside the first case 21 and the region inside the fourth case 24), which can contribute to reduce the unit 1 in size (in particular, in the axial direction X) as compared with a configuration in which the differential gear 56 is disposed only in the region inside the fourth case 24.

By increasing the transmission gear ratio of the entire reduction gear group 5 (since the transmission gear ratio and the reduction ratio are inversely proportional to each other, the reduction ratio is reduced), a maximum torque required for the motor 3 can be reduced, which can contribute to reduce the motor 3 in size. In addition, since the number of times of speed reduction is increased by adding the planetary gear mechanism 51 in order to increase the transmission gear ratio, a differential diameter (proportional to a diameter of the fourth gear 55 serving as a reduction gear rotating integrally with the differential gear 56) can be reduced, and therefore, the layout is facilitated.

### (Functions and Effects)

Next, main functions and effects of the present embodiment will be described.
(1) The unit 1 according to the present embodiment includes: the motor 3 (rotating electrical machine); the planetary gear mechanism 51 connected downstream of the motor 3 (rotating electrical machine); the first gear 52 connected downstream of the planetary gear mechanism 51; the second gear 53 to mesh with the first gear 52; and the third gear 54 connected downstream of the second gear 53. The motor 3 (rotating electrical machine), the planetary gear mechanism 51, and the first gear 52 are disposed along the axis C1 (first axis), the second gear 53 and the third gear 54 are disposed along the axis C2 (second axis), and the third gear 54 has a portion sandwiched between the planetary gear mechanism 51 and the second gear 53.

According to this configuration, by providing the planetary gear mechanism 51 coaxially between the first gear 52 serving as the first-stage gear and the motor 3, the expansion of the unit 1 in the radial direction can be prevented. Since the third gear 54 is sandwiched between the planetary gear mechanism 51 and the second gear 53, the expansion of the unit 1 in the axial direction X and the radial directions Y and Z is prevented. As a result, this can contribute to reduce the unit 1 in size.

(2) The unit 1 further includes: the fourth gear 55 to mesh with the third gear 54; the differential gear 56 connected downstream of the fourth gear 55; and the drive shaft 6 connected downstream of the differential gear 56. The fourth gear 55 and the differential gear 56 are disposed along the axis C3, and the differential gear 56 is disposed closer to the planetary gear mechanism 51 than the fourth gear 55.

According to this configuration, the space is generated radially outward from the space in which the planetary gear mechanism 51 is disposed, and this space can be effectively utilized by disposing the differential gear 56 in this space, which can contribute to reducing the entire unit 1 in size.

(3) The unit 1 further includes: the annular wall 214a (first wall portion) configured to fix the ring gear 513 of the planetary gear mechanism 51; and the second support wall 214c (second wall portion) configured to support the bearing B2 (first bearing) on which the differential gear 56 is supported. The annular wall 214a (first wall portion) and the second support wall 214c (second wall portion) are integrally formed.

According to this configuration, an increase in the number of components that constitute the support frame 214 can be prevented without individually forming the components.

(4) The unit 1 further includes the third case 23 (third wall portion) facing the planetary gear mechanism 51. The third case 23 (third wall portion) is formed separately from the annular wall 214a (first wall portion) and the second support wall 214c (second wall portion), and the bearing B5 (second bearing) that supports the first shaft 7 rotating integrally with the first gear 52 and the bearing B6 (third bearing) that supports the second shaft 8 rotating integrally with the third gear 54 are supported on the third case 23 (third wall portion).

According to this configuration, after the planetary gear mechanism 51 is attached to the annular wall 214a, the third case 23 that is separate from the first case 21, the first gear 52, the second gear 53, the third gear 54, and the like, can be attached, and therefore, the case structure that is easy to assemble can be obtained.

(5) The unit 1 further includes the inverter 4. When viewed in the radial direction, the inverter accommodating chamber S1 that accommodates the inverter has the portion that overlaps the planetary gear mechanism 51.

According to this configuration, the space is generated radially outward from the space in which the planetary gear mechanism 51 is disposed, and this space can be effectively utilized by forming the inverter accommodating chamber S1 in this space, which can contribute to reducing the entire unit 1 in size.

Although the embodiment of the present invention has been described above, the above embodiment is merely a part of application examples of the present invention, and is not intended to limit the technical scope of the present invention to the specific configurations of the above embodiment.

### DESCRIPTION OF REFERENCE SIGNS

- 1: unit
- 3: motor (rotating electrical machine)
- 4: inverter
- 6: drive shaft
- 7: first shaft
- 8: second shaft
- 23: third case (third wall portion)
- 51: planetary gear mechanism
- 52: first gear
- 53: second gear
- 54: third gear
- 55: fourth gear
- 56: differential gear
- 214a: annular wall (first wall portion)
- 214c: second support wall (second wall portion)
- B2: bearing (first bearing)
- B5: bearing (second bearing)
- B6: bearing (third bearing)
- C1: axis (first axis)
- C2: axis (second axis)
- C3: axis (third axis)
- S1: inverter accommodating chamber

## Claims

1. A unit comprising:
a rotating electrical machine;
a planetary gear mechanism connected downstream of the rotating electrical machine;
a first gear connected downstream of the planetary gear mechanism;
a second gear to mesh with the first gear; and
a third gear connected downstream of the second gear, wherein
the rotating electrical machine, the planetary gear mechanism, and the first gear are disposed along a first axis,
the second gear and the third gear are disposed along a second axis, and
the third gear has a portion sandwiched between the planetary gear mechanism and the second gear.

2. The unit according to claim 1, further comprising:
a fourth gear to mesh with the third gear;
a differential gear connected downstream of the fourth gear; and
a drive shaft connected downstream of the differential gear, wherein
the fourth gear and the differential gear are disposed along a third axis, and
the differential gear is disposed closer to the planetary gear mechanism than the fourth gear.

3. The unit according to claim 2, further comprising:
a first wall portion configured to fix a ring gear of the planetary gear mechanism; and
a second wall portion configured to support a first bearing on which the differential gear is supported, wherein
the first wall portion and the second wall portion are integrally formed.

4. The unit according to claim 3, further comprising a third wall portion facing the planetary gear mechanism, wherein
the third wall portion is formed separately from the first wall portion and the second wall portion, and
a second bearing configured to support a first shaft rotating integrally with the first gear and a third bearing configured to support a second shaft rotating integrally with the third gear are supported on the third wall portion.

5. The unit according to any one of claims 1 to 4, further comprising an inverter, wherein
when viewed in a radial direction, an inverter accommodating chamber configured to accommodate the inverter has a portion that overlaps the planetary gear mechanism.
